(19) **Europäisches Patentamt**
**European Patent Office**
**Office européen des brevets**

(11) **EP 4 664 491 A1**

(12) **EUROPEAN PATENT APPLICATION**

(43) Date of publication:
**17.12.2025 Bulletin 2025/51**

(51) International Patent Classification (IPC):
**G21K 1/00** (2006.01) **G06N 10/40** (2022.01)

(21) Application number: **24181618.0**

(52) Cooperative Patent Classification (CPC):
**G21K 1/00; G06N 10/40**

(22) Date of filing: **12.06.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **WAHL, Jakob**
**9500 Villach (AT)**

• **ANMASSER, Fabian**
**9800 Spittal an der Drau (AT)**
• **DIETL, Matthias German**
**9500 Villach (AT)**
• **SCHÜPPERT, Klemens Karl Heinrich**
**9584 Goritschach (AT)**
• **RÖSSLER, Clemens**
**9500 Villach (AT)**

(74) Representative: **Murgitroyd & Company**
**165-169 Scotland Street**
**Glasgow G5 8PL (GB)**

(54) **DEVICE FOR TRAPPING CHARGED ATOMIC OBJECTS**

(57)     A device for trapping charged atomic objects (100) including: a substrate (510) comprising a first major surface (520); at least one radio frequency, RF, electrode (101) configured to generate an RF potential for trapping at least one ion (150) along a trap axis, wherein the at least one RF electrode comprises a plurality of RF segments (111) arranged on the first major surface of the substrate, and wherein the plurality of RF segments are at least partly separated on the first major surface of the substrate; and a plurality of direct current, DC, electrodes (102) configured to generate a DC potential.

**FIG. 1A**

EP 4 664 491 A1

Processed by Luminess, 75001 PARIS (FR)

## Description

## TECHNICAL FIELD

The present disclosure relates to the field of charged atomic objects traps, and in particular to devices for trapping charged atomic objects, such as ions, for quantum computing or for atomic clocks.

## BACKGROUND

Trapped ions are one of the most promising candidates for use as qubits in quantum computers since they can be trapped with long lifetimes in a scalable array by virtue of electromagnetic fields. To improve the performance of quantum computers, the amount of controllable qubits must be increased, while improving the error rate. Future quantum computers will need to increase the number of controllable qubits to hundreds or thousands to outperform classical supercomputers. Further, the number of physical qubits per logical qubit will in future be raised to more than 100 ions in order to allow for more efficient error-correction during quantum computing. With increasing the number of ions, the area requirement for devices for trapping charged atomic objects such as, e.g., quantum computing devices increases.

An ion-trap surface may host several integrated features, such as RF electrodes for generating a RF potential for trapping at least one ion along a trap axis and DC electrodes for generating a DC potential, as well as optical elements. All these features are typically implemented on the traps surface within a limited area around a trapping position. There remains the need to overcome the spatial constraints in future ion traps with increasing number of integrated elements.

## SUMMARY

According to an aspect of the disclosure a device for trapping charged atomic objects comprises: a substrate comprising a first major surface; at least one radio frequency, RF, electrode configured to generate an RF potential for trapping at least one charged atomic object along a trap axis, wherein the at least one RF electrode comprises a plurality of RF segments arranged on the first major surface of the substrate, and wherein the plurality of RF segments are at least partly separated on the first major surface of the substrate; and a plurality of direct current, DC, electrodes configured to generate a DC potential.

Those skilled in the art will recognize additional features and advantages upon reading the following detailed description, and upon viewing the accompanying drawings.

## BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.

Figure 1A is a top view of an exemplary device for trapping charged atomic objects comprising segmented RF electrodes and DC electrodes.
Figure 1B is a top view of a conventional device for trapping charged atomic objects comprising non segmented RF electrodes and DC electrode.
Figure 2 is a plot of the modulation index versus a pitch of the RF segments for three different ion heights.
Figure 3A is a top view of an exemplary device for trapping charged atomic objects comprising segmented RF electrodes, DC electrode and optical elements for manipulating a state of at least one charged atomic object.
Figure 3B is a top view of an exemplary device for trapping charged atomic objects comprising segmented RF electrodes, segmented DC electrode and optical elements for manipulating a state of at least one charged atomic object.
Figure 3C is a top view of another exemplary device for trapping charged atomic objects comprising segmented RF electrodes, segmented DC electrode and optical elements for manipulating a state of at least one charged atomic object.
Figure 4A is a top view of an exemplary device for trapping charged atomic objects comprising segmented RF electrodes with a comb shape and segmented DC electrode.
Figure 4B is a top view of an exemplary device for another trapping charged atomic objects comprising segmented RF electrodes with a comb shape and segmented DC electrode.
Figure 4C is a top view of an exemplary device for another trapping charged atomic objects comprising segmented RF electrodes with a comb shape and segmented DC electrode.
Figure 5A is a schematic cross-sectional view of the exemplary device for trapping charged atomic objects of Figure 4A with substrate and with vias through the substrate for contacting the segmented RF electrode.
Figure 5B is a schematic cross-sectional view of the exemplary device for trapping charged atomic objects of Figure 4A with vias from another metal layer for contacting the segmented RF electrode.
Figure 6 is a schematic view of an exemplary device for trapping charged atomic objects comprising segmented RF electrodes with a comb shape and segmented DC electrode.
Figure 7 is a plot of the capacitance versus a width of the RF segments.

Figure 8 is a plot of the capacitance versus a width of the RF segments in percentage for four different positions of a RF segment relative to a DC segment.

## DETAILED DESCRIPTION

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof. In addition, the expression "substantially the same" means "the same within processing variations".

Where a layer or other component is described as being "on another layer, substrate, surface or other component, the preposition "on" is to be understood as encompassing "directly upon" but also "overlaying" with at least one intermediate layer, coating, resist or other component.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the devices including its preferred embodiments as outlined in the present document may be used stand-alone or in combination with the and devices disclosed in this document. In addition, the features outlined in the context of a device are also applicable to a corresponding method, and vice versa. Furthermore, all aspects of the devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

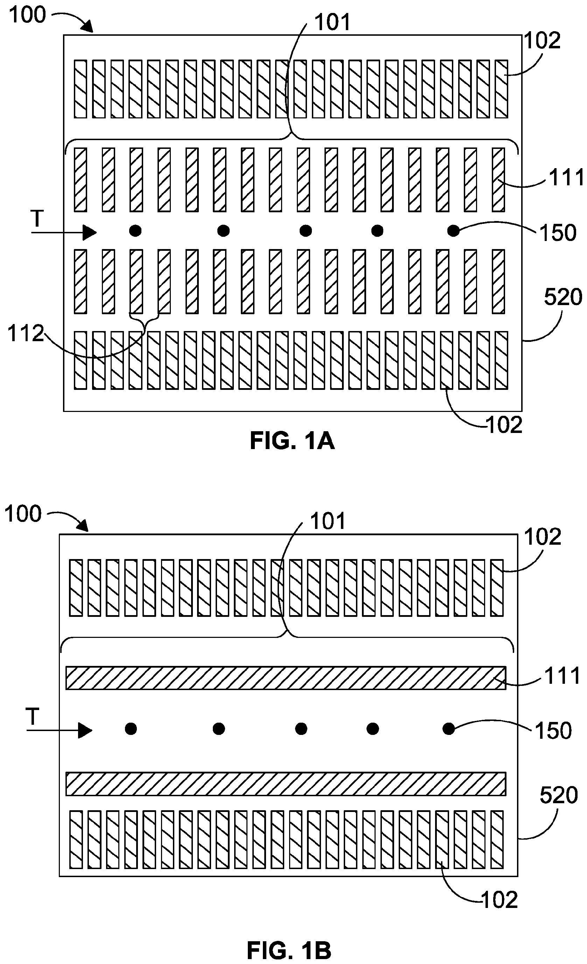

Figure 1A shows a schematic top view of an exemplary device for trapping charged atomic objects 100. The charged atomic objects may be for example ions. The device for trapping charged atomic objects 100 comprises a substrate 510 comprising a first major surface 520, at least one radio frequency, RF, electrode 101 configured to generate an RF potential for trapping at least one charged atomic object 150, such as an ion, along a trap axis T. The at least one RF electrode 101 comprises a plurality of RF segments 111 arranged on the first major surface 520 of the substrate 510. The plurality of RF segments 111 may be arranged directly on first major surface 520 of the substrate. Alternatively, the plurality of RF segments 111 may be arranged on the first major surface 520 of the substrate such that intervening layers may be provided between first major surface 520 of the substrate 510 and the plurality of rf segments 111. The intervening layers may be optical layers which may be used for routing / guiding light to optical couplers for qubit addressing; metal layers which may be used for routing DC or RF voltages and/or insulators, which be used for insulation between multiple layers of DC/RF routing. The plurality of RF segments 111 are at least partly separated on the first major surface 520 of the substrate 510. The plurality of RF segments 111 may be completely separated on the first major surface 520 of the substrate 510. Alternatively, the plurality of RF segments 111 may be partly connected and partly separated on the first major surface 520 of the substrate 510.

The device for trapping charged atomic objects 100 further comprises a plurality of direct current, DC, electrodes 102 configured to generate a DC potential. The at least one RF electrode 101 is configured such that when an oscillating voltage is applied thereto, the at least one RF electrode 101 generates a RF potential that is configured to trap at least one charged atomic object 150, such as an ion, along a trap axis T. The plurality of DC electrodes 102 are configured such that when a quasi-static voltage is applied thereto, the plurality of DC electrodes 102 generate a DC potential.

The at least one RF electrode 101 is segmented. The at least one segmented RF electrode 101 comprises a plurality of RF segments 111. Adjacent RF segments 111 of the at least one segmented RF electrode 101 are at least partly separated. The space that is no longer occupied by the RF electrode 101 due to is segmentation can be used for several purposes DC electrodes 102, DC routing and/or optical elements 103. Electrical signals are routed to the DC electrode 102 by DC routing. Thus, there is more space for DC electrodes 102 and shorter distances under RF electrodes 101 for routing the DC electrodes 102 from the side.

The at least one RF electrode 101 may be segmented periodically (i.e. evenly spaced apart), such that when the at least one charged atomic objects 150 is located within the RF potential generated by the at least one RF electrode 101 and the DC potential generated by the plurality of DC electrodes 102, the RF potential and the DC potential cause the at least one charged atomic object 150, such as an ion, to exhibit radial oscillations, also called perform radial modes. An oscillation frequency of the at least one charged atomic object 150 is at least sufficiently constant along a trap axis (T). such that the oscillation frequency of the radial oscillations show a variation which is at most 10%. The terms "periodicity" and "periodically" refer to spatial period.

The RF electrode 101 may be segmented periodically, such that RF residuals are sufficiently low and the oscillation frequency of the radial oscillations is at least sufficiently constant along the trap axis T. An upper limit for the gap between two RF segments 111 may be of 26 to 28 % of an ion-surface separation or electron height. This may be achieved by making the periodicity of the RF segments 111 sufficiently lower than the RF electrode 101 to charged atomic object separation. The periodicity of the RF segments 111 relates to the width of each of the plurality of RF segments 111 measured along the trap axis T, a distance between adjacent RF electrodes 101, the pitch 112 and a first distance between adjacent RF segments 111 of the plurality of rf segments 111. In figure 1A the RF electrodes 101 are segmented, but for the ion, the potential may still "look" like it would emerge from two long RF rails.

Conventionally the RF electrodes 101 are two long stripes going from left to right, see figure 1B. Figure 1B is a top view of a conventional device for trapping charged atomic objects comprising non segmented RF electrodes and DC electrodes. The (spatial) periodicity of the RF segments is hereafter termed "pitch". The terms "periodicity" and "periodically" refer to spatial period.

Adjacent RF segments 111 of the at least one segmented RF electrode 101 may be completely separated (as exemplarily shown in Figure 1A). The first distance between adjacent RF segments 111 of the at least one segmented RF electrode 101 may at least essentially be constant. Alternatively, the first distance between adjacent RF segments 111 of the at least one segmented RF electrode 101 may vary, for example within a predetermined tolerance of +/- 10%. The plurality of RF segments 111 of the at least one segmented RF electrode 101 may have a pitch 112. The plurality of RF segments 111 of the at least one segmented RF electrode 101 may define a second distance 112 between side surfaces of two adjacent RF segments 111, the side surfaces each facing a same direction. The second distance 112 may correspond to the pitch 112. The pitch 112 is the first distance between adjacent rf segments 111 plus the width of one rf segment 111 so the length of the unit cell which is repeated.

The oscillating voltage applied to the at least one RF electrode 101 may be a radio frequency (RF) field operating at around 200 volts, and 20 megahertz (MHz), for example. The plurality of RF electrodes 101 may be made of metal. The plurality of RF electrodes 101 may be deposited as layer on a substrate 510 for example via metal-organic chemical vapour deposition, MOCVD or Physical vapor deposition, PVD, for example sputtering. The shape of the RF electrodes 101 may be manufactured via an etching process after the deposition of the layer. The structuring of the RF segments 111 may be done with standard semiconductor manufacturing methods. First the conductive material may be deposited on the entire surface of the substrate e.g. by sputtering. Next, a resist may be deposited on top of the conductive material, which may be then structure with lithography in the shape of the electrodes. Next, the metal may be removed in areas, where it is not protected by resist, e.g. by wet chemical etching, or plasma etching.

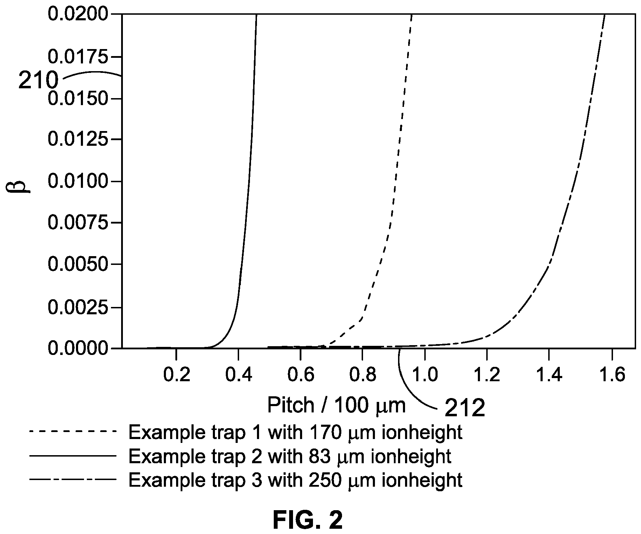

Figure 2 is a graph of the modulation index, $\beta$, 210 versus the pitch 112 of the RF segments 111 for three different example ion traps obtained by computer simulation. The pitch 112 is the first distance between adjacent rf segments 111 plus the width of one rf segment 111 (e.g., the length of a unit cell which is repeated). The modulation index $\beta$ describes the effect of an oscillation of the atomic object with respect to an addressing laser beam. In the frame of the atomic object, the oscillating motion can be described as a modulation of the phase of the laser and is proportional to the residual electric fied:

$$\beta = \frac{kQ}{m\Omega_{rf}^2} E_{rf}$$

with the wave vector in the direction of the oscillation of the atomic object k, the micromotion frequency, $\Omega_{rf}$ the frequency of the RF electric field, the charge of the atomic object Q and the residual rf electric field $E_{rf}$. Fig. 2 indicates how large the gaps between the RF segments 111 may be so that the RF potential will still substantially look like coming from a conventional non-segmented RF electrode. The exact values may depend on how much RF residuals are acceptable and the exact trap geometry. In some examples, the gaps between adjacent RF segments 111 may be as large as one fourth of a trapping height, also called ion height.

In this example, the RF segments 111 have a width of pitch/2 and are spaced by a distance of pitch/2. However, the ratio between the width of the RF segments 111 and the pitch may also be different, such as the width being 0.75 times the pitch or 0.25 times the pitch. In the examples shown in Figure 2, the pitch 112 between the RF segments 111 is between 40 μm and 250 μm. The modulation index β may roughly be below 0.005.

Generally speaking, the computer simulations illustrated in Fig. 2 show that altering the RF electrode as described in the present disclosure by separating the RF electrode into a plurality of segments does not substantially deteriorate the functionality of the ion trap for different example ion traps.

A distance between a plurality of adjacent pairs of the plurality of RF segments 111 may be substantially the same for each of the plurality of adjacent pairs, wherein the distance is measured along the trap axis T, where "substantially the same" means the same within processing variations. The distance between a plurality of adjacent pairs of the plurality of RF segments 111 may be equidistant, periodic and/or irregular. Alternatively, different distances between adjacent pairs of the plurality of RF segments 111 can also be combined with different widths of the RF electrode 101. The distance between the plurality of adjacent pairs of the plurality of RF segments may be smaller than an ion-to-electrode distance. The ion-to-electrode distance is the distance between the ion 150 and the at least one segmented RF electrode 101, such as the minimum distance between the ion 150 and the at least one segmented RF electrode 101. A width of the plurality of RF segments 111 may be substantially the same for each of the plurality of RF segments, wherein the width is measured along the trap axis T. The width of the plurality of RF segments 111 may be between 1 mm and 30 cm for example 20 cm. The length of the RF electrodes 101 may depend on the application of the surface trap. The length of the RF electrodes 101 may correspond to the sum of the lengths of at least a few RF segments 111. The RF electrodes 101 may be a few mm to a few cm long, for example 1 mm to 10cm, according to some examples.

A distance between a plurality of adjacent pairs of the plurality of RF segments 111 may be substantially the same for each of the plurality of adjacent pairs, wherein the distance is measured along the trap axis T. A width of the plurality of RF segments 111 may be substantially the same for each of the plurality of RF segments, wherein the width is measured along the trap axis T. The RF layout does not have to be symmetrical about the trap axis T. The two segmented RF 101 electrodes may have different widths or segmentations. A sum of the distance and the width may be at most 0.7 times a trapping height of the at least one ion 150 measured along an axis that is orthogonal to the first major surface. The width may be arbitrary small and the width may be smaller than the electrode to ion distance.

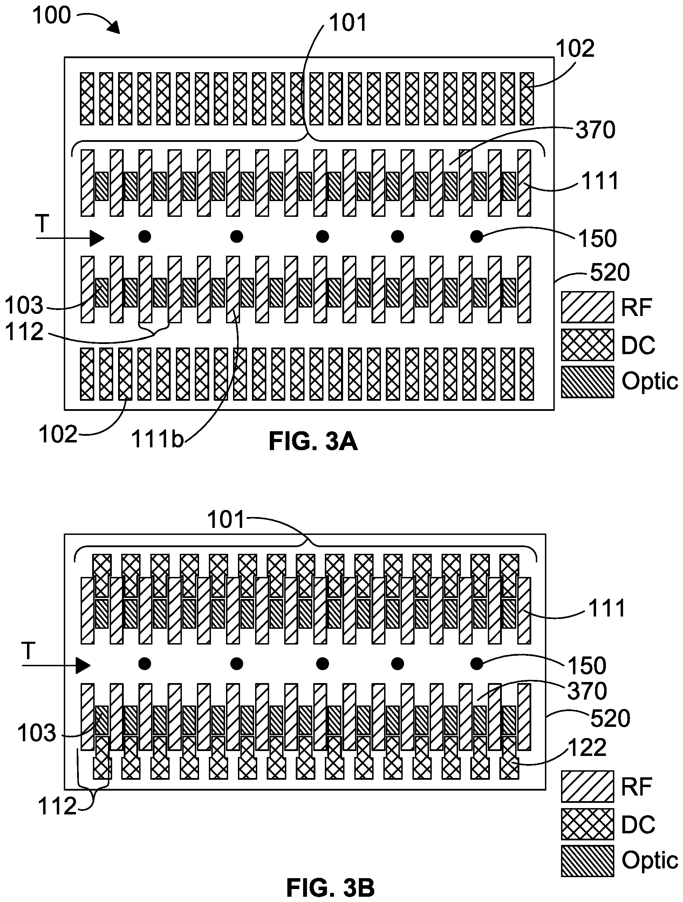

Figure 3A is a top view of an exemplary device for trapping charged atomic objects 100 comprising segmented RF electrodes 101, DC electrodes 102. The at least one RF electrode 101 comprises a plurality of RF segments 111 is arranged on the first major surface 520 of the substrate 510. Between the plurality of RF segments 111 and the first major surface 520 of the substrate 510 may be intermediary layers. The plurality of RF segments 111 are at least partly separated on the first major surface of the substrate such that a first space 370 is formed between a first pair of adjacent RF segments of the plurality of RF segments. The plurality of RF segments (111) are at least partly separated on the first major surface of the substrate such that a first space 370 is formed between a first pair of adjacent RF segments of the plurality of RF segments. The first free space 370 may be used for optical elements 103 and/or dc electrodes 102. Thus, space is generated by segmenting the RF electrodes. The device for trapping charged atomic objects 100 may further comprise at least one optical element 103. The at least one optical element 103 may be arranged on the first major surface 520 of the substrate 510 and/or between two adjacent RF segments 111 of the plurality of RF segments. In some examples, laser light may enter the device for trapping charged atomic objects 100 from the side or from above. In other examples, waveguides and output gratings may be located in some photonic layer which may serve as a laser light path for guiding laser light to a position of an charged atomic object, such as an ion. The optical element 103 may be at least one of a detector, a mirror, a beam splitter, a coupler, a grating. The optical elements 103 may be used for routing / guiding light to optical couplers for qubit addressing.

The optical elements 103 may be configured to manipulate and/or cause a controlled quantum state evolution of one or more charged atomic objects within the device for trapping charged atomic objects 100. The optical elements 103 may be required to deliver and collect light to and from charged atomic objects 150 within the device for trapping charged atomic objects 100. The optical elements 103 may be provided between RF segments 111. The at least one optical element 103 may be arranged between two adjacent RF segments 111 of the at least one segmented RF electrode 101. The at least one optical element 103 may be arranged in a space between two adjacent RF segments 111 of the at least one segmented RF electrode 101. Each of the optical elements 103 may be arranged between two adjacent RF segments 111 of the at least one segmented RF electrode 101. The space gained by reducing the size of the RF electrode 101 may be used for optical routing, arranging one or more optical elements 103 in the space and/or reducing the overlap of metal in RF/DC crossings of the RF electrode 101 and the DC electrode 102. Optical signals are routed to the optical electrode 103 by optical routing. By reducing the overlap of metal in RF/DC crossings of the RF electrode 101 and the DC electrode 102 more space, such as first and/or second space, is generated that could be used for example for optical elements 103 and/or the dc electrode 102.

Optical elements 103 may be at least one of a mirror, a beam splitter, a coupler, a grating. Optical elements 103 may comprise one or more mirror, beam splitter, microwave sources, and/or the like), coupler, grating. The lasers may provide one or more laser beams to the device for trapping charged atomic objects 100 within a cryostat and/or vacuum chamber. The laser beams may be used to perform various operations (e.g., parallel operations), such as enacting one or more quantum gates on one or more qubits, cooling of one or more charged atomic objects, reading a qubit and/or determining a quantum state of an charged atomic object, initializing an charged atomic object into the qubit space, and/or the like. In various embodiments, the optical elements 103 may be controlled by respective driver controller elements of a controller. Optical elements can also be called manipulation means, since they are used to manipulate the state of the trapped charged atomic objects.

Figure 3B is a top view of an exemplary device for trapping charged atomic objects 100 comprising segmented RF electrodes 101, segmented DC electrode 102 and optical elements 103 for manipulating a state of at least one charged atomic object 150. The space between RF segments 111 may be used for optical elements 103 and partially for DC electrodes 102. At least one DC electrode 122 of the plurality of DC electrodes 102 may be arranged on the first major surface 520 of the substrate 510 and at least partly between an adjacent pair of RF segments 111 of the plurality of RF segments 111. At least one DC electrode 122 of the plurality of DC electrodes 102 may be arranged on the first major surface 520 of the substrate 510 and between an adjacent pair of RF segments 111 of the plurality of RF segments. At least one DC electrode 122 may be longer than the RF segments 111, such that the at least one DC electrode 122 may stick out on both ends of the RF segments 111. This would be the case, for example, if the supply line for a DC electrode 102 is passed between two RF segments 111.

At least one DC electrode 102 of the plurality of DC electrodes 102 may be segmented. The DC electrode may be segmented except a ground electrode. The at least one segmented DC electrode 102 may comprise a plurality of DC segments 122. A spacing between adjacent DC segments 122 of the at least one segmented DC electrode 102 may be constant. At least one DC segment 122 may be arranged between two adjacent RF segments 111 of the at least one segmented RF electrode 101. Each DC segment 122 of the at least one segmented DC electrode 102 may be arranged between two adjacent RF segments 111 of the at least one segmented RF electrode 101. The plurality of DC electrodes 102 may be made of metal. The plurality of DC electrodes 102 may be deposited as layer on a substrate 510 for example via metal-organic chemical vapour deposition, MOCVD or Physical vapour deposition, PVD, for example sputtering. The shape of the DC electrodes 102 may be manufactured via an etching process after the deposition of the layer. The DC electrodes 102 and RF electrodes 101 may be structured out of the same metal layer.

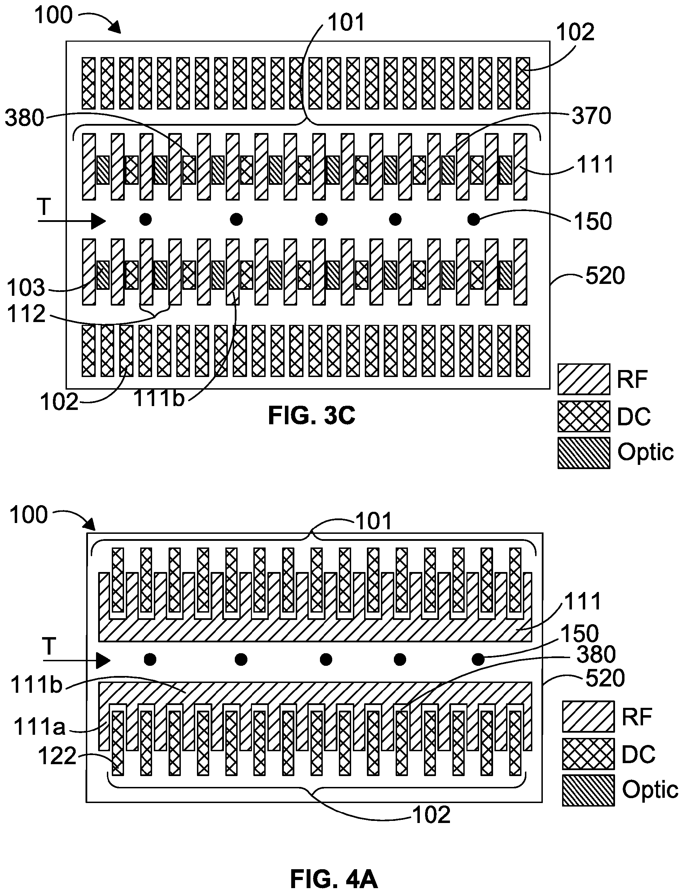

Figure 3C is a top view of another exemplary device for trapping charged atomic objects comprising segmented RF electrodes, segmented DC electrode and optical elements for manipulating a state of at least one charged atomic objects 150. The plurality of RF segments 111 are at least partly separated on the first major surface of the substrate such that a first space 370 is formed between a first pair of adjacent RF segments of the plurality of RF segments. The at least one DC electrode 122 of the plurality of DC electrodes 102 is arranged at least partly in the first space 370 between the first pair of adjacent RF segments 111. The device 100 for trapping charged atomic further comprising at least one optical element 103. The at least one optical element 103 is arranged in the first space between the first pair of adjacent RF segments 111. A second space 380 is formed between a second pair of adjacent RF segments of the plurality of RF segments. The at least one DC electrode 122 of the plurality of DC electrodes (102) is arranged at least partly in the second space 380 between the second pair of adjacent RF segments 111.

Figure 4A is a top view of an exemplary device for trapping charged atomic objects 100 comprising segmented RF electrodes 101 with a comb shape and segmented DC electrode 102. The second space 380 is used for the segmented DC electrode 102.

The at least one RF electrode 101 may further comprise an RF bus 111B. The plurality of RF segments may be connected via the RF bus 111B. The RF bus 111B may be arranged on the first major surface 520 of the substrate 510. The at least one RF electrode 101 may have a comb shape. The RF bus 111B and the RF segments 111 may be on an uppermost metal layer of a multi-layer stack. The multi-layer stack comprises more than two layers carrying more than two conductor tracks.

The at least one segmented RF electrode 101 may have a comb shape. The at least one segmented RF electrode 101 may comprise a plurality of RF tooth segments 111A and a RF bar segment 111B. The RF bus 111B may be a RF bar segment 111B. The segments of the comb may be RF tooth segments 111A. The plurality of RF tooth segments 111A may be connected with the RF bar segment 111B. In figure 4A the RF electrode 101 is segmented, but RF segments 111 are connected with a lead and form a RF comb. Therefore, this concept may be suitable for a single-layer trap. The spaces between adjacent pairs of RF segments 111 can be used for DC electrodes 102, which come closer to the charged atomic object 150 then they would in a continuous RF electrode. Alternatively, there can be optical elements 103 instead of or in addition to the DC segments 122 arranged in the spaces between adjacent pairs of RF segments 111. The at least one segmented RF electrode 101 is arranged on the substrate 510 in the comb shape embodiment. For the other embodiments, part of the RF electrode 101 will be not on the substrate 510.

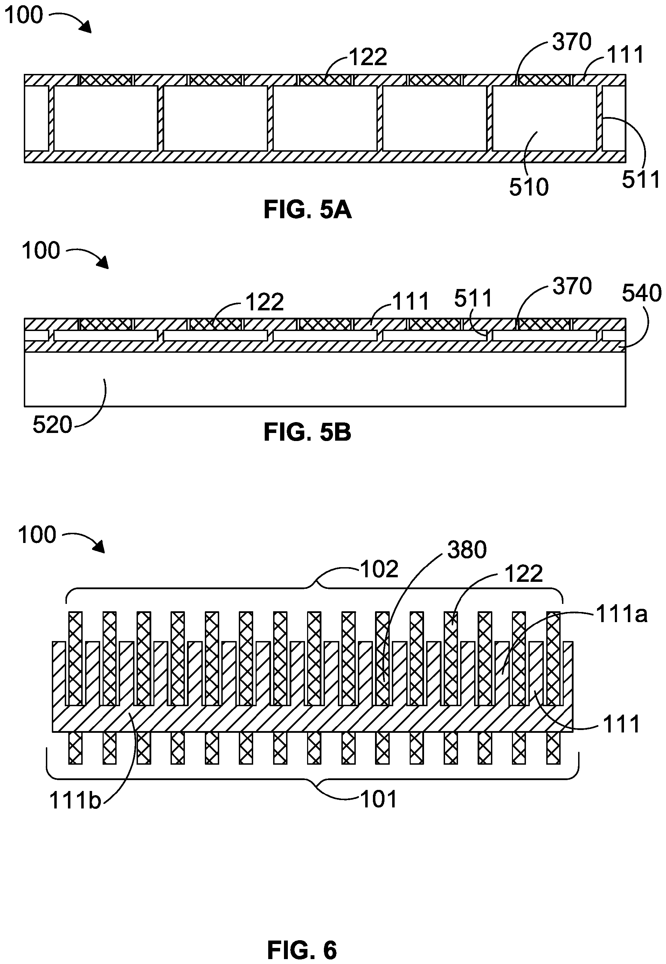

When implementing a RF comb, similar to the structure in figure 4A, it can be useful to use the 'thinner' part of the RF electrode 101, namely the part of the RF electrode 101 where there are no RF tooth segments 111A, as places to cross a DC lead, which results in a lower capacitance with respect to ground, than if we would cross over the broad RF electrode, namely the part of the RF electrode 101 where there are RF tooth segments 111A. In other examples, contacting of the RF segments can be achieved with vias 511 through the substrate 510, see Figure 5A or with vias 511 from another metal layer 520, see figure 5B.

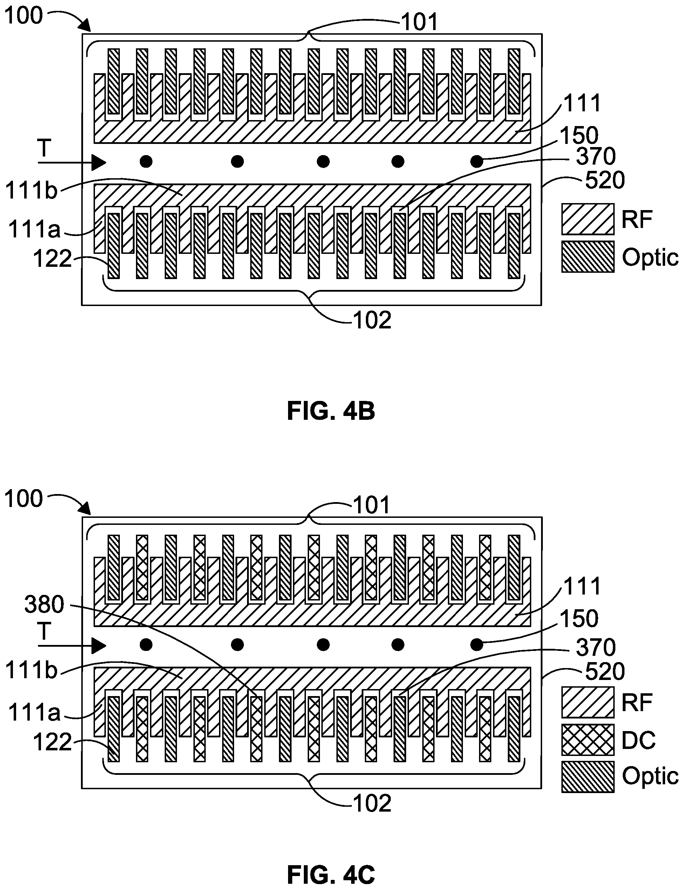

Figure 4B is a top view of an exemplary device for another trapping charged atomic objects comprising segmented RF electrodes with a comb shape and segmented DC electrode. Figure 4B differs from Figure 4A in that the first space 370 is used for optical elements 103.

Figure 4C is a top view of an exemplary device for another trapping charged atomic objects comprising segmented RF electrodes with a comb shape and segmented DC electrode. Figure 4C differs from Figure 4A in that the first space 370 is used for optical elements 103 and the second space 380 is used for segmented DC electrode 102.

Figure 5A is a schematic cross-sectional view of the exemplary device for trapping charged atomic objects 100 of Figure 4A with substrate 510 and with vias 511 through the substrate 510 for contacting the segmented RF electrode 101. The RF bus 111B may be arranged on a second major surface of the substrate 510 opposing the first major surface 520. The plurality of RF segments 111 may be connected with the RF bus 111B by through substrate vias, TSVs. TSVs provide a vertical electrical connection via that passes completely through a silicon wafer or die. The at least one segmented RF electrode 101 may be arranged on the substrate 510. The substrate may have a thickness between 100 $\mu$m to 1.5 mm, for example 725 $\mu$m. The plurality of RF segments 111 of the at least one segmented RF electrode 101 may be contacted with vias 511 through the substrate 510.

Figure 5B is a schematic cross-sectional view of the exemplary device for trapping charged atomic objects 100 of Figure 4A with vias 511 from another metal layer 540 for contacting the segmented RF electrode 101. The plurality of RF segments 111 may be part of an uppermost metal layer of a multi-layer stack that is arranged on the first major surface 520 of the substrate 510. The RF bus 111B may be arranged in a metal layer of the multi-layer stack below the uppermost layer of the multi-layer stack, and the plurality of RF segments 111 may be connected with the RF bus 111B by vias that extend from the metal layer to the uppermost layer of the multi-layer stack. A via is an electrical connection between two or more metal layers. Essentially a via is a small, drilled hole that goes through two or more adjacent layers; the hole is plated with metal that forms an electrical connection through the insulating layers. The plurality of RF segments 111 of the at least one segmented RF electrode 101 may be contacted with vias 511 from another metal layer 540. A third distance between the RF segments 111 and the another metal layer 540 may be equal to or smaller than 1.1 times 2 $\mu$m.

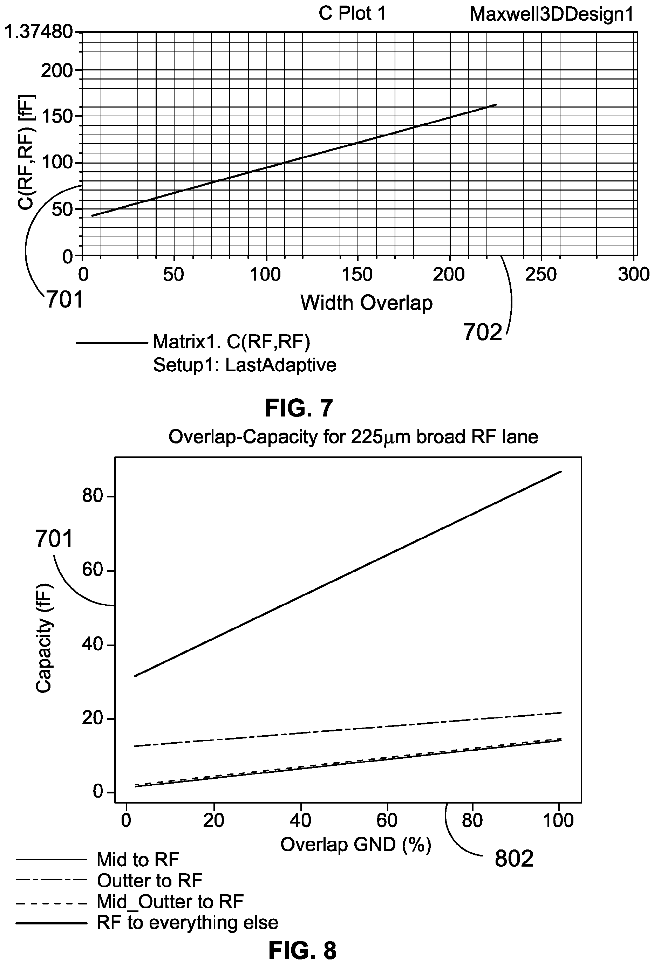

Figure 6 is a schematic view of an exemplary device for trapping charged atomic objects 100 comprising segmented RF electrodes 101 with a comb shape and segmented DC electrode 102. The DC lead may be arranged underneath a dielectric isolation layer, cross the RF segment 111 and a dielectric isolation on the other side. Figure 6 shows an RF comb with crossing of electrical contact line also called DC leads. The two metal layers are separated by a ground metal plane as shielding layer. The effects on the capacitance between RF and ground can be seen in Figure 8. The DC electrodes 102 may go underneath the RF bus 111B of the comb.

Figure 7 is a graph of the capacitance versus a width of the RF segments. Figure 7 shows a RF electrode 101 with 225 $\mu$m width is build up as a RF comb. DC lines cross the RF electrode 101 under the RF bus 111B also called RF interconnects as shown in Figure 6. The capacitance 701 of RF electrode 101 measured to ground is shown as a function of the width of the RF connection 702. The figure shows, that the capacitance 701 is decreasing linearly with the width of the RF segments also called RF connection 702. Figure 7 exemplarily shows that the capacitance is lower, if the overlapping area between RF electrode and DC lead is lower.

Figure 8 is a graph of capacitance versus a width of the RF segments in percentage for four different positions of a RF segment 111 relative to a DC segment 122. Figure 8 shows the situation as in Figure 6, but the ground plane is omitted. Five wires are passing between to RF segments 111, under the RF bus 111B also called a RF bridge. The capacitance 701 is shown as function of the width of the RF segment 802 with 100% refers to a RF bridge that is as wide as the RF electrode 101 itself (225 $\mu$m).

The following examples pertain to further aspects of the disclosure:

Example 1 is a device for trapping charged atomic objects. The device includes at least one radio frequency, RF, electrodes configured to generate an RF potential for trapping at least one charged atomic object, along a trap axis T. The device further includes a plurality of direct current, DC, electrodes configured to generate a DC potential. The at least one RF electrode is segmented periodically, such that when the at least one charged atomic object is located within the RF potential generated by the plurality of RF electrodes and the DC potential generated by the plurality of DC electrodes, the RF potential and the DC potential cause the at least one charged atomic object to perform radial oscillations wherein an oscillation frequency of the at least one charged atomic object 150 is at least essentially constant along the trap axis T. The at least one segmented RF electrode includes a plurality of RF segments. The at least one charged atomic object may be an ion.

In Example 2 the subject matter of Example 1 can optionally include wherein adjacent RF segments of the at least one segmented RF electrode 101 are at least partly separated.

In Example 3 the subject matter of Example 2 can optionally include wherein a distance between adjacent RF segments of the at least one segmented RF electrode is constant.

In Example 4 the subject matter of Example 3 can optionally include wherein the plurality of RF segments of the at least one segmented RF electrode have a pitch.

In Example 5 the subject matter of Example 4 can optionally include wherein each of the plurality of RF segments has a width that is equal to or smaller than 1.1 times half the pitch.

In Example 6 the subject matter of Example 4 or Example 5 can optionally include wherein the pitch 112 between the RF segments is 40 $\mu m$ for 83 $\mu m$ ion height; 80 $\mu m$ for 170 $\mu m$ ion height or 140 $\mu m$ for 250 $\mu m$ ion height.

In Example 7 the subject matter of any preceding Example can optionally include wherein the at least one segmented RF electrode has a comb shape.

In Example 8 the subject matter of any preceding Example can optionally include wherein at least one DC electrode of the plurality of DC electrodes is segmented.

In Example 9 the subject matter of Example 7 can optionally include wherein the at least one segmented DC electrode comprises a plurality of DC segments, and wherein a spacing between adjacent DC segments of the at least one segmented DC electrode is constant.

In Example 10 the subject matter of Example 8 can optionally include wherein at least one DC segment is arranged between two adjacent RF segments of the at least one segmented RF electrode; wherein each DC segment of the at least one segmented DC electrode is arranged between two adjacent RF segments of the at least one segmented RF electrode.

In Example 11 the subject matter of any preceding Example can optionally include further comprising manipulation means for manipulating a state of the at least one charged atomic object.

In Example 12 the subject matter of Example 10 or Example 11 can optionally include wherein the at least one manipulation means is arranged between two adjacent RF segments of the at least one segmented RF electrode.

In Example 13 the subject matter of Example 10 or Example 11 can optionally include wherein each of the manipulation means is arranged between two adjacent RF segments of the at least one segmented RF electrode.

In Example 14 the subject matter of any preceding Example can optionally include further comprising a substrate, wherein the at least one segmented RF electrode is arranged on the substrate, wherein the plurality of RF segments of the at least one segmented RF electrode are contacted with vias through the substrate.

In Example 15 the subject matter of any preceding Example can optionally include wherein the plurality of RF segments of the at least one segmented RF electrode are contacted with vias from another metal layer.

Example 30 is a device for trapping charged atomic objects. The device includes a substrate comprising a first major surface. The device further includes at least one radio frequency, RF, electrode configured to generate an RF potential for trapping at least one charged atomic object. The at least one RF electrode comprises a plurality of RF segments arranged on the first major surface of the substrate. The plurality of RF segments are at least partly separated on the first major surface of the substrate such that a first space is formed between a first pair of adjacent RF segments of the plurality of RF segments; and a plurality of direct current, DC, electrodes configured to generate a DC potential.

In Example 31 the subject matter of Example 30 can optionally include at least one DC electrode of the plurality of DC electrodes is arranged at least partly in the first space between the first pair of adjacent RF segments.

In Example 32 the subject matter of Example 30 can optionally include the device for trapping charged atomic objects according to Example 30, further comprising at least one optical element, and wherein the at least one optical element is arranged in the first space between the first pair of adjacent RF segments.

In Example 33 the subject matter of Example 32 can optionally include a second space is formed between a second pair of adjacent RF segments of the plurality of RF segments, and wherein at least one DC electrode of the plurality of DC electrodes is arranged at least partly in the second space between the second pair of adjacent RF segments.

In Example 34 the subject matter of Examples 32 or 33 can optionally include the optical element is at least one of a detector, a mirror, a beam splitter, a coupler, a grating.

In Example 35 the subject matter of any preceding Example can optionally include a distance between each of a plurality of pairs of adjacent RF segments of the plurality of RF segments is substantially the same, wherein the distance is measured along a trap axis.

In Example 36 the subject matter of Example 35 can optionally include wherein the distance between each of the plurality of pairs of adjacent RF segments is smaller than an charged atomic object-to-electrode distance. The charged atomic object-to-electrode distance may be an ion-to-electrode distance.

In Example 37 the subject matter of any preceding Example can optionally include wherein a width of the plurality of RF segments is substantially the same for each of the plurality of RF segments, wherein the width is measured along a trap axis.

In Example 38 the subject matter of Example 37 can optionally include wherein the width of the plurality of RF segments is between 1 mm and 30 mm.

In Example 39 the subject matter of any preceding Example 30 to 33 can optionally include Wherein a distance between a plurality of adjacent pairs of the plurality of RF segments is substantially the same for each of the plurality of adjacent pairs, wherein the distance is measured along a trap axis, and wherein a sum of the distance and the width is at most 0.7 times a trapping height of the at least one charged atomic object measured along an axis that is orthogonal to the first major surface.

In Example 40 the subject matter of any preceding Example can optionally include wherein the plurality of RF segments are separated on the first major surface.

In Example 41 the subject matter of any preceding Example can optionally include wherein the at least one RF electrode further comprises an RF bus, wherein the plurality of RF segments are connected via the RF bus.

In Example 42 the subject matter of Example 41 can optionally include wherein the RF bus is arranged on the first major surface of the substrate, and wherein the at least one RF electrode has a comb shape.

In Example 43 the subject matter of Example 42 can optionally include wherein the plurality of DC electrodes is arranged at least partly below the RF bus of the comb.

In Example 44 the subject matter of Example 41 can optionally include wherein the plurality of RF segments are part of an uppermost metal layer of a multi-layer stack that is arranged on the first major surface of the substrate, wherein the RF bus is arranged in a metal layer of the multi-layer stack below the uppermost layer of the multi-layer stack, and wherein the plurality of RF segments are connected with the RF bus by vias that extend from the metal layer to the uppermost layer of the multi-layer stack.

In Example 45 the subject matter of Example 41 can optionally include wherein the RF bus is arranged on a second major surface of the substrate opposing the first major surface, and wherein the plurality of RF segments are connected with the RF bus by through substrate vias, TSVs.

In Example 46 the subject matter of any preceding Example can optionally include wherein the at least one RF electrode is periodically segmented, such that when the at least one charged atomic object is located within the RF potential generated by the at least one RF electrode and the DC potential generated by the plurality of DC electrodes, the RF potential and the DC potential cause the at least one charged atomic object to exhibit radial oscillations, wherein an oscillation frequency of the at least one charged atomic object is at least sufficiently constant along a trap axis.

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A device (100) for trapping charged atomic objects comprising:

   a substrate (510) comprising a first major surface (520);

at least one radio frequency, RF, electrode (101) configured to generate an RF potential for trapping at least one charged atomic object (150), wherein the at least one RF electrode (101) comprises a plurality of RF segments (111) arranged on the first major surface (520) of the substrate (510), and wherein the plurality of RF segments (111) are at least partly separated on the first major surface of the substrate such that a first space (370) is formed between a first pair of adjacent RF segments of the plurality of RF segments; and

a plurality of direct current, DC, electrodes (102) configured to generate a DC potential.

2. The device (100) for trapping charged atomic objects according to claim 1, wherein at least one DC electrode (122) of the plurality of DC electrodes (102) is arranged at least partly in the first space (370) between the first pair of adjacent RF segments (111).

3. The device (100) for trapping charged atomic objects according to claim 1, further comprising at least one optical element (103), and wherein the at least one optical element (103) is arranged in the first space between the first pair of adjacent RF segments (111).

4. The device (100) for trapping charged atomic objects according to claim 3, wherein a second space (380) is formed between a second pair of adjacent RF segments of the plurality of RF segments, and wherein at least one DC electrode (122) of the plurality of DC electrodes (102) is arranged at least partly in the second space (380) between the second pair of adjacent RF segments (111).

5. The device for trapping charged atomic objects according to claim 3 or 4, wherein the optical element (103) is at least one of a detector, a mirror, a beam splitter, a coupler, a grating.

6. The device for trapping charged atomic objects according to any of the preceding claims, wherein a distance between each of a plurality of pairs of adjacent RF segments of the plurality of RF segments (111) is substantially the same, wherein the distance is measured along a trap axis (T).

7. The device for trapping charged atomic objects according to claim 6, wherein the distance between each of the plurality of pairs of adjacent RF segments is smaller than a charged atomic object-to-electrode distance.

8. The device for trapping charged atomic objects according to any of the preceding claims, wherein a width of the plurality of RF segments (111) is substantially the same for each of the plurality of RF segments, wherein the width is measured along a trap axis (T).

9. The device for trapping charged atomic objects according to claim 8, wherein the width of the plurality of RF segments (111) is between 1 mm and 30 mm.

10. The device for trapping charged atomic objects, according to any of claims 1 to 4, wherein a distance between a plurality of adjacent pairs of the plurality of RF segments (111) is substantially the same for each of the plurality of adjacent pairs, wherein the distance is measured along a trap axis (T), and wherein a sum of the distance and the width is at most 0.7 times a trapping height of the at least one charged atomic object (150) measured along an axis that is orthogonal to the first major surface (520).

11. The device for trapping charged atomic objects according to any of the preceding claims, wherein the plurality of RF segments are separated on the first major surface.

12. The device for trapping charged atomic objects according to any of the preceding claims, wherein the at least one RF electrode (101) further comprises an RF bus (111B), wherein the plurality of RF segments are connected via the RF bus (111B).

13. The device for trapping charged atomic objects according to claim 12, wherein the RF bus (111B) is arranged on the first major surface (520) of the substrate (510), and wherein the at least one RF electrode (101) has a comb shape.

14. The device for trapping charged atomic objects according to claim 13, wherein the plurality of DC electrodes (102) is arranged at least partly below the RF bus (111B) of the comb.

15. The device for trapping charged atomic objects according to claim 12,

wherein the plurality of RF segments (111) are part of an uppermost metal layer of a multi-layer stack that is arranged on the first major surface (520) of the substrate (510), wherein the RF bus (111B) is arranged in a metal layer of the multi-layer stack below the uppermost layer of the multi-layer stack, and wherein the plurality of RF segments (111) are connected with the RF bus (111B) by vias that extend from the metal layer to the uppermost layer of the multi-layer stack, or wherein the RF bus (111B) is arranged on a second major surface of the substrate (510) opposing the first major surface (520), and wherein the plurality of RF segments (111) are connected with the RF bus (111B) by through substrate vias, TSVs.

16. The device for trapping charged atomic objects according to any of the preceding claims, wherein the at least one RF electrode (111) is periodically segmented, such that when the at least one charged atomic object (150) is located within the RF potential generated by the at least one RF electrode (101) and the DC potential generated by the plurality of DC electrodes (102), the RF potential and the DC potential cause the at least one charged atomic object (150) to exhibit radial oscillations, wherein an oscillation frequency of the at least one charged atomic object (150) is at least sufficiently constant along a trap axis (T).

**FIG. 1A**

**FIG. 1B**

FIG. 2

**FIG. 3A**

RF
DC
Optic

**FIG. 3B**

RF
DC
Optic

**FIG. 3C**

RF
DC
Optic

**FIG. 4A**

RF
DC
Optic

**FIG. 4B**

**FIG. 4C**

**FIG. 5A**

**FIG. 5B**

**FIG. 6**

**FIG. 7**

Overlap-Capacity for 225μm broad RF lane

— Mid to RF
— · — · — Outter to RF
— — — — Mid_Outter to RF
— RF to everything else

**FIG. 8**

Europäisches
Patentamt

European
Patent Office

Office européen
des brevets

# EUROPEAN SEARCH REPORT

**Application Number**

EP 24 18 1618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/290995 A1 (KUMPH MUIR [AT]) 1 December 2011 (2011-12-01) | 1,2,6,8, 9,11-13 | INV. G21K1/00 |
| Y | * paragraphs [0038] - [0040], [0055]; | 15 | G06N10/40 |
| A | figure 3 * | 14 | |
| | ----- | | |
| X | US 2022/136999 A1 (GARIMELLA VENKATA BS [US] ET AL) 5 May 2022 (2022-05-05) | 1,2,6,8, 9,11-13 | |
| Y | * paragraphs [0099] - [0104]; figures 6B, | 15 | |
| A | 6C, 7A, 7B * | 14 | |
| | ----- | | |
| X | EP 3 088 354 A1 (HONEYWELL INT INC [US]) 2 November 2016 (2016-11-02) | 1,6,8,9, 11,12,15 | |
| Y | * paragraphs [0040] - [0048]; figures 3, 4 | 15 | |
| A | * | 14 | |
| | ----- | | |

**TECHNICAL FIELDS SEARCHED (IPC)**

G06N
G21K
G01N
H01J

The present search report has been drawn up for all claims

| Place of search | Date of completion of the search | Examiner |
|---|---|---|
| Munich | 13 January 2025 | Sewtz, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**Application Number**

**EP 24 18 1618**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

    see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

    12-15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

| | | | |
|---|---|---|---|
| Europäisches Patentamt European Patent Office Office européen des brevets | **LACK OF UNITY OF INVENTION** **SHEET B** | **Application Number** **EP 24 18 1618** |

The Search Division considers that the present European patent application does not comply with the requirements of unity of invention and relates to several inventions or groups of inventions, namely:

1. claims: 1, 2, 6, 8, 9, 11

   A device for trapping charged atomic objects as defined in claim 1, wherein at least one DC electrode of the plurality of DC electrodes is arranged at least partly in the first space between the first pair of adjacent RF segments.
   ---

2. claims: 3-5

   A device for trapping charged atomic objects as defined in claim 1, further comprising at least one optical element, and wherein the at least one optical element is arranged in the first space between the first pair of adjacent RF segments.
   ---

3. claims: 7, 10, 16

   A device for trapping charged atomic objects as defined in claim 1 or 6, wherein the distance between each of the plurality of pairs of adjacent RF segments is smaller than a charged atomic object-to-electrode distance.
   ---

4. claims: 12-15

   A device for trapping charged atomic objects as defined in claim 1, wherein the at least one RF electrode further comprises an RF bus, wherein the plurality of RF segments are connected via the RF bus.
   ---

## ANNEX TO THE EUROPEAN SEARCH REPORT
## ON EUROPEAN PATENT APPLICATION NO.

EP 24 18 1618

This annex lists the patent family members relating to the patent documents cited in  the above-mentioned European search report.
The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| US 2011290995 A1 | 01-12-2011 | EP 2390899 A1 | 30-11-2011 |
| | | US 2011290995 A1 | 01-12-2011 |
| US 2022136999 A1 | 05-05-2022 | AU 2016335524 A1 | 19-04-2018 |
| | | AU 2019203114 A1 | 23-05-2019 |
| | | CA 3000341 A1 | 13-04-2017 |
| | | CN 109154583 A | 04-01-2019 |
| | | CN 113345790 A | 03-09-2021 |
| | | EP 3359960 A1 | 15-08-2018 |
| | | EP 3812755 A1 | 28-04-2021 |
| | | JP 6439080 B1 | 19-12-2018 |
| | | JP 6738396 B2 | 12-08-2020 |
| | | JP 2019060881 A | 18-04-2019 |
| | | JP 2019500579 A | 10-01-2019 |
| | | SG 10201906362T A | 27-08-2019 |
| | | US 2019004011 A1 | 03-01-2019 |
| | | US 2019369050 A1 | 05-12-2019 |
| | | US 2022136999 A1 | 05-05-2022 |
| | | US 2024003847 A1 | 04-01-2024 |
| | | WO 2017062102 A1 | 13-04-2017 |
| EP 3088354 A1 | 02-11-2016 | EP 3088354 A1 | 02-11-2016 |
| | | US 2016322188 A1 | 03-11-2016 |
| | | US 2017301501 A1 | 19-10-2017 |
| | | US 2018204701 A1 | 19-07-2018 |
| | | US 2020027684 A1 | 23-01-2020 |
| | | US 2020227226 A1 | 16-07-2020 |

EPO FORM P0459

For more details about this annex : see Official Journal of the European Patent Office, No. 12/82